(19) Europäisches Patentamt
European Patent Office
Office européen des brevets

(11) EP 1 947 604 A1

(12) # EUROPEAN PATENT APPLICATION

published in accordance with Art. 158(3) EPC

(43) Date of publication:
**23.07.2008 Bulletin 2008/30**

(21) Application number: **06820027.8**

(22) Date of filing: **10.10.2006**

(51) Int Cl.:
***G06T 5/00*** *(2006.01)*

(86) International application number:
**PCT/ES2006/070150**

(87) International publication number:
**WO 2007/042596 (19.04.2007 Gazette 2007/16)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **14.10.2005 ES 200502510**

(71) Applicant: **Consejo Superior de Investigaciones Cientificas (CSIC)**
**28006 Madrid (ES)**

(72) Inventors:
- **CRISTÓBAL PÉREZ, Gabriel**
  **E-28006 Madrid (ES)**
- **SROUBEK, Filip**
  **E-28006 Madrid (ES)**

(74) Representative: **Pons Arino, Angel**
**Glorieta Rubén Dario N° 4**
**28010 Madrid (ES)**

(54) **BLIND DECONVOLUTION AND SUPER-RESOLUTION METHOD FOR SEQUENCES AND SETS OF IMAGES AND APPLICATIONS THEREOF**

(57) The invention relates to an images which is obtained using any Standard capture method and to the subsequent processing thereof. The inventive method comprises the simultaneous processing of input images and the pixel-by-pixel restoration (deconvolution) of same using a novel mathematical algorithm. In addition, when more than one image of the scene is available, the system can perform a super-resolution of the input images. The invention can be directly applied to digital cameras, digital video cameras, mobile telephones, photo and video editing programs, image analysis programs for microscopy and astronomy, analysis of medical images, forensic images, image-based security systems, aerial images and artwork restoration among other applications.

Real world scene
(u)
Blur effect
Movement effect
Camera sampling
(D)
Additive noise
Low-resolution image observed
Acquisition of multiple images
Reconstruction of the real scene
Function of E(u,h_k)
a priori knowledge
Minimization of E with respect to u
Minimization of E with respect to h_k
Estimated high-resolution image

Figure 1

EP 1 947 604 A1

## Description

In general terms, the present patent of invention relates to the processing of images, achieved by any conventional method of capture, blurred or of low resolution. It has direct application in digital photographic cameras, digital video cameras, mobile phones, video and photography edition programmes, image analysis programmes for microscopy and astronomy, analysis of medical images, forensic image, image-based security systems, aerial image and in the restoration of works of art, among others.

## STATE OF THE ART

Within the scope of image processing, superresolution (SR) is understood as those techniques which provide an improvement in the resolution of the images captured or acquired by the system. There are several points of view so that a certain technique can be considered to provide SR. Some authors consider as SR all those methods which exceed the diffraction limits of the systems, whilst others consider SR to be those techniques which go beyond the limits of the digital image sensor. There are also variants of SR which use a single-frame of the image or multiple-frames, this last case, however, being of greatest interest. In the majority of SR algorithms, the information which is gained in the SR image is present in the low-resolution images in the form of "aliasing" or spectral dispersion. It is for this reason that a requirement so that the SR can be obtained is that the sensor has limited features so that the "aliasing" may be present. On the other hand, the term deconvolution (image restoration) in optics refers to a process of inverting the optical distortion obtainable with any optical instrument, e.g. camera, microscope, telescope, etc. with the object of obtaining sharper images. Deconvolution techniques are also useful for improving images which have suffered distortion due to rapid movement during the capture.

The methods of superresolution, used in some image-processing computer programmes, consider that the misalignment between them is unknown when the scale of the subpixel is considered (the most used due to the quality of the end results), but, however, all of them assume that the function of point spread function (PSF) of the channels (low-resolution observations or LR,), is known to us *a priori.* The PSF is the mathematical function which describes the distortion suffered by a theoretical point of light on passing through the measuring instrument or sensor in question. A complete bibliographic review on the matter can be consulted in [Nguyen 05].

Until now, the practical methods used in the art to resolve the aforementioned problems in image processing are: a) Maximum Likelihood, ML), b) Maximum a Posteriori (MAP), c) Projection onto convex sets (POCS), and, finally, d) Fast Fourier Transform based techniques (FFT). All of them provide a reasonable solution to the problem of obtaining the superresolution image. Recently, new, more advanced techniques have been proposed [Segall 03, Hardie 97] which permit carrying out an appropriate estimate of the subpixel slip and, therefore, of the SR image. However, it still does not concern, strictly speaking, blind methods, i.e. methods in which the blur is either previously known or is considered not to exist. Recently, several researchers [Nguyen 05, Woods 03] proposed a blind SR method which uses PSF but which may be modelled on a single parameter (with the time savings that this simplification entails). However, this last restriction greatly limits the practical applicability of this type of method with the subsequent decrease in resolution (quality) of the final image. With the aim of resolving this situation, a complete blind SR method has recently been proposed [Wirawan 99, Yagle 03], but, however, in its formulation, there is an inherent irresolution in the way in which the high-resolution image is obtained, with the disadvantage of being very sensitive to noise. Other preliminary results leading to the resolution of the problem of blind estimation of the superresolution image have been proposed in [Biggs 04] by a modification of the Richardson-Lucy method.

With regard to the known commercial products, Adobe Photoshop and Philips have some superresolution systems. Nevertheless and as previously mentioned, they do not provide similar features to those permitted by the system proposed herein. The manufacturers of mobile phones or digital cameras may be potential recipients. This would involve that in order to obtain high-quality images it would not be necessary to have high-definition sensors. There is no commercial product which allows performing deconvolution (image restoration) and superresolution simultaneously. Some of the patents related to the present proposal are mentioned at the end of this document. Reference [Callico 05] describes the current state of the art in terms of the process of implementation of the superresolution methods in real time, a work recently presented in the congress of the SPIE (The International Society for Optical Engineering) by members of the [(Instituto Universitario of Microelectrónica Aplicada (University Institute of Applied Microelectronics)] of the University of Las Palmas (IUMA)

## DESCRIPTION OF THE INVENTION

### Brief description

The present invention consists of a process of simultaneous processing of blurred or out of focus images, achieved by any traditional process, and its restoration pixel by pixel by means of a mathematical blind deconvolution algorithm. Furthermore, and in the case of having more than one image of the scene captured, the method is capable of providing superresolution of the input images.

## Detailed description

The processing of images plays a fundamental role in many applications such as astronomy, remote perception, microscopy or tomography, among others. Due to the imperfections of the capture devices (optical degradations, limited size of the CCD sensors, etc.) as well as the instability of the scene observed (moving objects, atmospheric turbulence, etc.), the images acquired may appear blurred, noisy and they may even have insufficient spatial and time resolution.

The present invention tackles the problem of providing new processes for processing and reconstructing images.

The invention is based on the fact that the inventors are capable of recovering the original image by the simultaneous techniques of blind deconvolution and superresolution which permit eliminating the blur and increasing the resolution, respectively. A necessary condition so that said methods are stable is having more than one image of the scene in question (sets of images). The differences between the images of a set are necessary in order to provide new information, which otherwise would be imperceptible [(for example, by means of small slips or slight modifications in the acquisition parameters (focal length, aperture size, etc.)].

The current techniques of blind deconvolution of sets of images do not require (or at most, require little) prior information on the blur and are sufficiently robust to noise to provide satisfactory results in most applications. However, said methods process low resolution images with difficulty. In contrast, the current superresolution techniques provide satisfactory results in the improvement of resolution by means of the estimation of subpixel slip between images, but are incapable of calculating the blur. The current methods of superresolution suppose the non-existence of blur or that it may be estimated by other means. This patent proposes a unified method of reconstruction of an image which simultaneously provides an estimate of the blur present in the images, without any *a priori* knowledge thereof or the existence of the original image. This problem is resolved by means of the blind estimation of the original image, by means of an SR process based on variational calculation methods by means of the minimization of an energy functional together with appropriate terms of regularization. The grounds of this type of method consist of incorporating in said energy functional all the knowledge available on the problem. A functional is a function that can take other functions as an argument, such as, for example, integrals of an unknown function and their derivatives. It is of great interest to use the so-called "extreme" functions as arguments, i.e. functions which make the functional reach a maximum or a minimum. By means of said minimization, a robust method is obtained which permits simultaneously estimating the PSF, the subpixel misalignment and the high resolution image. This guarantees an almost perfect solution to the problem (in the case of absence of noise). The method can be extended to the 3D case, not only in the case of volumes (confocal microscopy, electronic tomography), but also in the case of image sequences (video) where the third dimension is time, as well as in the case of colour images.

It is important to indicate in this point that none of the systems known at this time is capable of providing the aforementioned simultaneous information, for which reason this patent of invention constitutes a significant advance in the area of image processing.

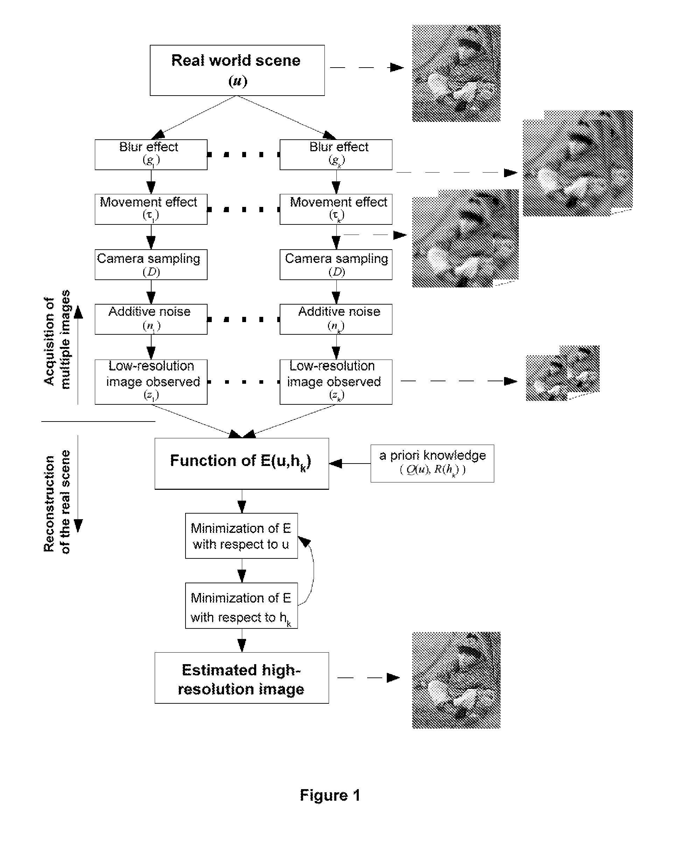

Figure 1 presents a general operating diagram of the patent of invention proposed. The upper part presents the multiple image acquisition system, whilst the lower part presents the reconstruction of the high resolution image from the real world. It can be observed that the quality of the reconstructed image is practically identical to the image from the real world. Below, the general expression which governs the functioning of the method in order to be able to fix the notation used in the rest of the document, is presented:

$$D[u * g_k](\tau_k(x,y)) + n_k(x,y) = z_k(x,y) \quad (1)$$

In Equation 1, $z_k$ are the images acquired by the sensor or the sensors and therefore represent the unique input data to the system due to the blind character of the method in question. The original image (to be obtained) without degradations or with greater resolution is represented by u. The blur functions $g_k$ intervene in the process by means of a convolution operation represented by the symbol *, whilst D represents a decimated operator which is what reports the superresolution process. The noise present in the system is represented by $n_k$. The objective which is pursued is to perform the estimate of u only from the information provided by the input images $z_k$. The problem is resolved by means of the minimization of an energy functional E, which depends on the original image u and blur functions $h_i$, wherein the $h_i$ are derived from the $g_k$ by no more than including the slips of $t_k$ in $g_k$. For this, it is considered that the input images may present small slips, i.e. that the hypothesis established is that the PSF functions of the blur may show slips. This fact provides a greater degree of robustness to the system due to the fact that this is tolerant to small changes in the recording (alignment) of the images, in addition to providing the additional information necessary to obtain the superresolution. The expression of energy E(u,hk) stated in Figure 1 is given by,

$$E(u,\{h_k\}) = \sum_{k=1}^{K} \|D[u * h_k] - z_k\|^2 + \lambda Q(u) + \gamma R(\{h_k\}) \qquad (2)$$

wherein the first term of the right of equation 2 has an obvious interpretation since it represents the minimization of the quadratic error between the original image and the images acquired, whilst the other two terms represent regularization functions of the original image and the blur, respectively, and which are necessary to consider in order that the solution is more stable. For the first of them Q, i.e. the term of regularization of the original image, several solutions have been proposed. They are all based on the minimization of a functional derived from the gradient of the image, such as, for example, the Tichonov regularization, anisotropic regularization or the Mumford-Shah regularization (see reference [Sroubek 03]).

In the examples which illustrate the present patent, the total variation method (Total Variation) has been used for Q [Sroubek 03]. Once the problem has been formulated in the aforementioned form, the final solution is determined by means of a process of successive minimization in accordance with u and $h_i$ of said functional energy given by Equation 2. With regard to the second term of regularization R of the blur, this is based on the differences between each pair of blurred input images, by means of a mathematical expression which approximates zero for the correct values of the blur. Therefore, an object of the present invention constitutes a method of processing of a low resolution and/or blurred image, hereinafter method of the invention, which permits the simultaneous estimate of the point spread function and the subpixel misalignment and the high resolution image and which comprises the following stages:

i) obtainment of several images of the problem image by acquisition techniques or sensors of conventional images,
ii) simultaneous or unified reconstruction of the images of a) by a technique or method of deconvolution or multiframe blind estimate of the original image and a superresolution method based on a variational calculation method by means of the minimization a function of energy (E) by a process of restricted squared minimums together with appropriate terms of regularization of the original image and the blur, where the general expression which governs the functioning of the method is,

$$D[u * g_k](\tau_k(x,y)) + n_k(x,y) = z_k(x,y)$$

such that, $Z_k$ are the images acquired by the sensor or the sensors; the original image (to be obtained) without degradations or with higher resolution represented by u; The blur functions $g_k$ intervene in the process by means of a convolution process represented by the symbol *, whilst D represents a decimated operator (fractional dyadic) which is what reports the superresolution process; and, the noise present in the system is represented by $n_k$, and where, the expression of energy E(u,hk) is given by,

$$E(u,\{h_k\}) = \sum_{k=1}^{K} \|D[u * h_k] - z_k\|^2 + \lambda Q(u) + \gamma R(\{h_k\})$$

and,
iii) Obtainment of the high resolution image of the original image.
A particular object of the invention constitutes the method of the invention wherein the function of regularization of the original image (Q) is carried out by minimization of a functional derived from the gradient of the image belonging, by way of illustration and without limiting the invention, to the following group: the Tichonov regularization, anisotropic regularization or the Mumford-Shah regularization or the total variation method (Total Variation) [Sroubek 03].
A particular embodiment of the present invention is constituted by the method of the invention wherein the function of regularization of the original image (Q) is carried out by the total variation method (Total Variation) (see Example 1 and 2).
Another object of the present invention is constituted by the use, hereinafter use of the method of the invention, of the method of the invention for the reconstruction or recovery of images.
A particular object of the invention constitutes the use of the method of the invention wherein the image is two-dimensional or three-dimensional, and in the case of the latter not only for the case of volumes (confocal microscopy, electronic tomography), but also in the case of image sequences (video) where the third dimension is time. Likewise, these images may be in black or white, range of any colour or in colour.

The images on which the method of the application may be applied may be of different origin, for example, by way of illustration and without limiting the scope of the invention: images from digital photographic cameras, digital video cameras, mobile phones, video and photography edition programmes, image analysis programmes for microscopy - among others, confocal microscopy or electronic tomography - and of astronomy, analysis of medical images, forensic images, image-based security systems, aerial images or works of art as a frame subject to restoration.

Bibliographic references:

[Biggs 04] D.S. Biggs, C.L.Wang, T.J. Holmes, and A. Khodjakov, "Subpixel deconvolution of 3D optical microscope imagery," in Proc. SPIE Vol. 5559, pp. 369-380, Oct. 2004.
[Callico 05]G. Callicó et al., "Practical Considerations for real-time superresolution implementation techniques over video coding platforms", SPIE Microtechnologies for the New Millenium, Seville, May, 2005.
[Hardie 97] R.C. Hardie, K.J. Barnard, and E.E. Armstrong, "Joint MAP registration and high-resolution image estimation using a sequence of undersampled images," IEEE Trans. Image Processing., vol. 6, pp. 1621-1633, Dec. 1997.
[Nguyen 05] N. Nguyen, P. Milanfar, and G. Golub, "Efficient generalized cross-validation with applications to parametric image restoration and resolution enhancement," IEEE Transactions on Image Processing, vol. 10, no. 9 , pp. 1299- 1308, Sep. 2001.
[Park 03] S.C. Park, M.K. Park, and M.G. Kang, "Superresolution image reconstruction: A technical overview," IEEE Signal Processing Magazine, vol. 20, pp. 21-36, 2003.
[Segall 03] C.A. Segall, R. Molina, and A.K. Katsaggelos,"High-resolution image from low-resolution compressed video," IEEE Signal Processing Magazine, vol. 20, pp. 37-48, 2003.
[Sroubek 03] Sroubek, F. and Flusser, J. "Multichannel Blind Iterative Image Restoration," IEEE Transactions on Image Processing, 12,9, pp. 1094-1106, 2003
[Wirawan 99] Wirawan, P. Duhamel, and H. Maitre, "Multichannel high resolution blind image restoration," in Proc. IEEE ICASSP, AZ, pp. 3229-3232, Nov. 1999.
[Woods 03] N.A. Woods, N.P. Galatsanos, and A.K. Katsaggelos, "EM-Based Simultaneous Registration, Restoration, and Interpolation of Superresolved Images," in Proc. IEEE ICIP, pp. 303-306, Sep. 2003.
[Yagle 03] A.E. Yagle, "Blind superresolution from undersampled blurred measurements," in Proc. SPIE Vol. 5205, pp. 299-309, Dec. 2003. Other patents related with the present proposal
[Messing 02] Messing, D. and Sezan, M.I. "Resolution improvement for multiple images", US Patent No. 6466618, 2002.
[Gregory 02] Gregory, D.D. et al "Super Resolution methods for electrooptical systems", US Patent No. 6483952, 2002 [Burt 02] Burt, P. et al "Mosaic based image processing system", US Patent No. 6393163, 2002.
[Patti 01] Patti, A.J. et al "Method for generated Resolution enhanced still images from compressed video data", US Patent No. 6304682, 2001.

## DESCRIPTION OF THE FIGURES

**Figure 1.** General diagram of the image acquisition and processing system of the invention. The upper part shows the acquisition system of multiple images and the lower part shows the reconstruction of a real scene.

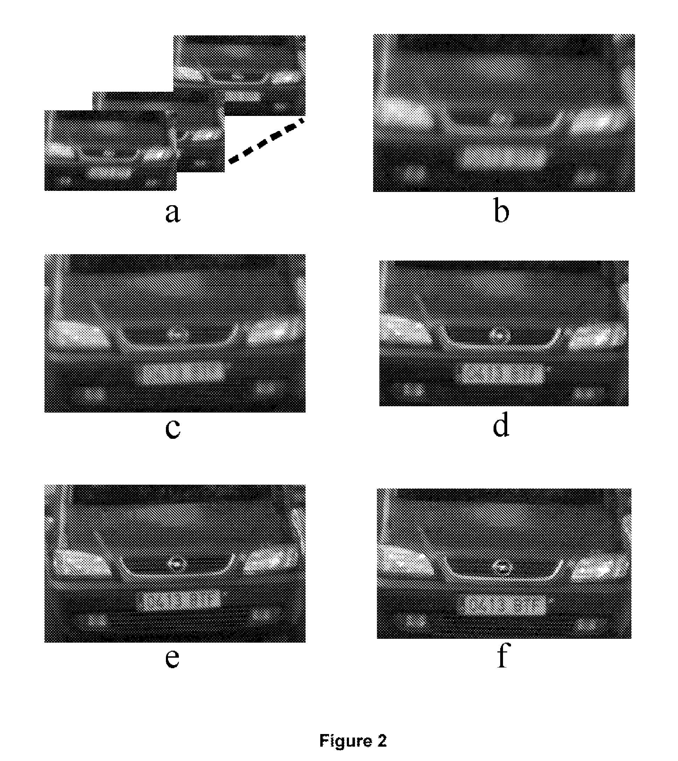

**Figure 2.** Reconstruction of an original image with the observer in movement. (a) Set of low resolution images which constitute the data input to the system; (b) Result of the linear interpolation of the first frame of the sequence considered; (c) Result of the linear interpolation of a low resolution frame (LR) using a tripod to avoid the blur due to movement; (d) Result of the linear interpolation after applying the multi-frame blind deconvolution process; (e) Image captured with tripod using optical zoom. This image may be considered as reference when evaluating the result of the reconstructed high resolution image; (f) Result of the proposed image which combines the application of a multi-frame blind deconvolution process together with a superresolution process. It can be observed that the result (f) constitutes a very good approximation to (e), whilst (d) provides an unsatisfactory result.

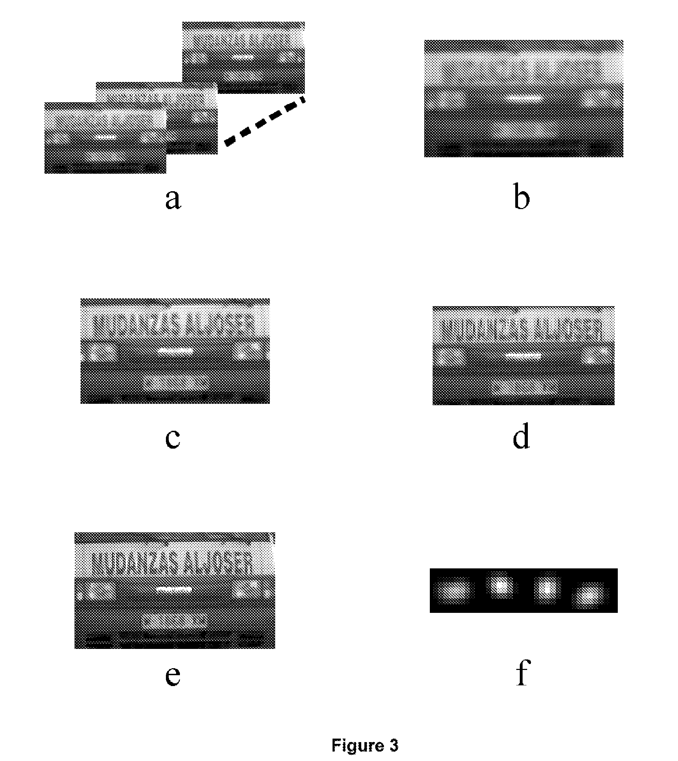

**Figure 3.** Reconstruction of an image with the original in movement. (a) Set of low resolution images which constitute the data input to the system; (b) Result of the linear interpolation of the first frame of the sequence considered; (c) Result of the linear interpolation after applying the multi-frame blind deconvolution process; (d) Result provided by the best current superresolution technique. This figure shows that this method is incapable of eliminating the blur present in the input images; (e) Result of the method proposed here and which combines the application of a multi-frame blind deconvolution process together with a superresolution process; (f) Blur functions which provide the method of the invention.

## EXAMPLE OF THE EMBODIMENT OF THE INVENTION

Two examples of practical use of the technique developed have been presented, by way of illustration and without this representing a limitation to the scope of the invention.

Example 1. Reconstruction of a blurred image due to movement of the observer.

The first scenario consists of the detection of license plates, wherein the blur presented by the images is due to the capture conditions due to the movement introduced by the observer on holding the camera (Figure 2). Likewise, the low lighting conditions or the far distance of the object of interest produces low quality input images (Figure 1a) which hinders both the identification of the alphanumerical characteristics of the license plate and the characteristics which identify the vehicle, such as make, form of the chassis, etc.

The image obtained by the method of the invention (Figure 2f) is better even than those obtained by an optical zoom with tripod (Figure 2e) which are considered of reference, and clearly better than those obtained by other known methods (Figure 1 b, c and d). Details of the image capture process: Olympus Digital camera, 5 Mpixels model C-5050. Aperture: 8.0; Shutter speed: 1/20 sec.; Focal length: 11.9 mm (for the low resolution images). For the high resolution images, the same previous parameters, except the focal length: 21.3 mm.

Example 2.- Reconstruction of a blurred image due to movement of the object.

The second scenario consists of the capture of low-resolution images of a vehicle which moves forward to the camera (Figure 3). It is observed that the method of the invention is capable of carrying out a compensation due to the movement and obtaining a high-resolution image (Figure 3e) as output with greater resolution than those obtained by the other techniques (Figure 3b, c and d), better even than with the best current superresolution technique [Hardie 97], which is incapable of eliminating the blur present in the input images (Figure 3d). The result of Fig. 3d has been obtained from an implementation of the method described in [Hardie 97] to which an improvement has been incorporated consisting of preserving the edges of the image.

This would be a case complementary to the previous one, wherein the camera is fixed and the object in movement. Details of the image capture process: Olympus Digital camera, 5 Mpixels model C-5050. Aperture: 8.0; Shutter speed: 1/30 sec.; Focal length: 21.3 mm.

## Claims

**1.** Method of processing a low resolution and/or blurred image **characterized in that** it permits the simultaneous estimation of the point spread function and the high-resolution image and **in that** it comprises the following stages:

i) obtainment of several images of the problem image by acquisition techniques or sensors of conventional images,

ii) simultaneous or unified reconstruction of the images of a) by a technique or method of deconvolution or multiframe blind estimate of the original image and a superresolution method based on a variational calculation method by means of the minimization a function of energy (E) by a process of restricted squared minimums together with appropriate terms of regularization of the original image and the blur, where the general expression which governs the functioning of the method is,

$$D[u * g_k](\tau_k(x, y)) + n_k(x, y) = z_k(x, y)$$

such that, $Z_k$ are the images acquired by the sensor or the sensors; the original image (to be obtained) without degradations or with higher resolution represented by u; The blur functions $g_k$ intervene in the process by means of a convolution process represented by the symbol *, whilst D represents a decimated operator (fractional dyadic) which is what reports the superresolution process; and, the noise present in the system is represented by $n_k$, and where, the expression of energy E(u,hk) is given by,

$$E(u, \{h_k\}) = \sum_{k=1}^{K} \|D[u * h_k] - z_k\|^2 + \lambda Q(u) + \gamma R(\{h_k\})$$

and,

iii) Obtainment of the high resolution image of the original image.

**2.** Method according to the claim 1, **characterized in that** the function of regularization of the original image (Q) of ii) is carried out by minimization of a functional derived from the gradient of the image belonging to the following group: the Tichonov regularization, anisotropic regularization or the Mumford-Shah regularization.

**3.** Method according to the claim 1, **characterized in that** the function of regularization of the original image (Q) of ii) is carried out by the total variation method.

**4.** Use of the method according to the claims 1 to 3 for the reconstruction or recovery of images.

**5.** Use according to the claim 4, **characterized in that** the image is two-dimensional or three-dimensional, and in the case of the latter not only for the case of volumes, but also in the case of sequences of images where the third dimension is time.

**6.** Use according to the claim 4, **characterized in that** the image is in black and white, in a range of any colour or in colour.

**7.** Use according to the claim 4, **characterized in that** the image may be of different origin.

**8.** Use according to the claim 7, **characterized in that** the origin of the image belongs to the following group: images from digital photographic cameras, digital video cameras, mobile phones, video and photography edition programmes, image analysis programmes for microscopy - among others, confocal microscopy or electronic tomography - and of astronomy, analysis of medical images, forensic images, image-based security systems, aerial images or works of art as frame.

Real world scene
(u)
Blur effect
($g_1$)
Blur effect
($g_k$)
Movement effect
($\tau_1$)
Movement effect
($\tau_k$)
Camera sampling
(D)
Camera sampling
(D)
Additive noise
($n_1$)
Additive noise
($n_k$)
Low-resolution image observed
($z_1$)
Low-resolution image observed
($z_k$)
Acquisition of multiple images
Reconstruction of the real scene
Function of $E(u,h_k)$
a priori knowledge
( $Q(u)$, $R(h_k)$ )
Minimization of E with respect to u
Minimization of E with respect to $h_k$
Estimated high-resolution image


Figure 1

a
b
c
d
e
f

Figure 2

a
b
MUDANZAS ALJOSER
c
d
MUDANZAS ALJOSER
e
f

Figure 3

# INTERNATIONAL SEARCH REPORT

International application No.
PCT/ ES 2006/070150

A. CLASSIFICATION OF SUBJECT MATTER

*G06T 5/00* (2006.01)

According to International Patent Classification (IPC) or to both national classification and IPC

B. FIELDS SEARCHED

Minimum documentation searched (classification system followed by classification symbols)
G06T 5/00

Documentation searched other than minimum documentation to the extent that such documents are included in the fields searched

Electronic data base consulted during the international search (name of data base and, where practicable, search terms used)

CIBEPAT,EPODOC,WPI

C. DOCUMENTS CONSIDERED TO BE RELEVANT

| Category* | Citation of document, with indication, where appropriate, of the relevant passages | Relevant to claim No. |
|---|---|---|
| A | US 2002145671 A1 (ALON et al.) 10.10.2002, | 1 |
| A | US 2003001867 A1 (MATSUMOTO et al.) 02.01.2003, | 1 |
| A | US 6229928 B1 (MATSUZAWA et al.) 08.05.2001, | 1 |
| A | US 4532548 A (ZWIRN et al.) 30.07.1985, | 1 |

☐ Further documents are listed in the continuation of Box C. ☒ See patent family annex.

* Special categories of cited documents:
"A" document defining the general state of the art which is not considered to be of particular relevance.
"E" earlier document but published on or after the international filing date
"L" document which may throw doubts on priority claim(s) or which is cited to establish the publication date of another citation or other special reason (as specified)
"O" document referring to an oral disclosure use, exhibition, or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other documents , such combination being obvious to a person skilled in the art
"&" document member of the same patent family

| Date of the actual completion of the international search | Date of mailing of the international search report |
|---|---|
| 14-12-2006 | (11-01-2007) |
| Name and mailing address of the ISA/ O.E.P.M. Paseo de la Castellana, 75 28071 Madrid, España. Facsimile No. 34 91 3495304 | Authorized officer Mª C. González Vasserot Telephone No. +34 91 3493087 |

Form PCT/ISA/210 (second sheet) (April 2005)

INTERNATIONAL SEARCH REPORT

Information on patent family members

International application No.

PCT/ ES 2006/070150

| Patent document cited in the search report | Publication date | Patent family member(s) | Publication date |
|---|---|---|---|
| US 2002145671 | 10.10.2002 | US 7065256 | 20.06.2006 |
| | | | 20.06.2006 |
| | | | 20.06.2006 |
| US 2003001867 | 02.01.2003 | US 6993208 | 31.01.2006 |
| | | JP 2003008888 | 10.01.2003 |
| US 6229928 | 08.05.2001 | JP 11096334 | 09.04.1999 |
| US 4532548 | 30.07.1985 | WO 8402990 | 02.08.1984 |
| | | AU 2654484 | 15.08.1984 |
| | | BR 8405178 | 26.12.1984 |
| | | JP 60500386 T | 22.03.1985 |
| | | JP 3064908 B | 08.10.1991 |
| | | EP 0135578 | 03.04.1985 |
| | | EP 19840901129 | 25.01.1984 |
| | | TR 21758 | 06.06.1985 |
| | | ES 8505153 | 16.07.1985 |
| | | ES 8606698 | 01.10.1986 |
| | | AU 561191 B | 30.04.1987 |
| | | IL 70644 | 16.09.1987 |
| | | DE 3465804 D | 08.10.1987 |
| | | IN 162953 | 23.07.1988 |
| | | IT 1208667 | 10.07.1989 |
| | | KR 920003047 B | 13.04.1992 |
| | | EG 16646 | 30.06.1992 |

Form PCT/ISA/210 (patent family annex) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6466618 B
- US 2002 A
- US 6483952 B
- US 6393163 B
- US 6304682 B
- US 2001 A


### Non-patent literature cited in the description


- **D.S. BIGGS ; C.L.WANG ; T.J. HOLMES ; A. KHODJAKOV.** Subpixel deconvolution of 3D optical microscope imagery. *Proc. SPIE,* October 2004, vol. 5559, 369-380
- **G. CALLICÓ et al.** Practical Considerations for real-time superresolution implementation techniques over video coding platforms. *SPIE Microtechnologies for the New Millenium,* May 2005
- **R.C. HARDIE ; K.J. BARNARD ; E.E. ARMSTRONG.** Joint MAP registration and high-resolution image estimation using a sequence of undersampled images. *IEEE Trans. Image Processing.,* December 1997, vol. 6, 1621-1633
- **N. NGUYEN ; P. MILANFAR ; G. GOLUB.** Efficient generalized cross-validation with applications to parametric image restoration and resolution enhancement. *IEEE Transactions on Image Processing,* September 2001, vol. 10 (9), 1299-1308
- **S.C. PARK ; M.K. PARK ; M.G. KANG.** Superresolution image reconstruction: A technical overview. *IEEE Signal Processing Magazine,* 2003, vol. 20, 21-36
- **C.A. SEGALL ; R. MOLINA ; A.K. KATSAGGELOS.** High-resolution image from low-resolution compressed video. *IEEE Signal Processing Magazine,* 2003, vol. 20, 37-48
- **SROUBEK, F. ; FLUSSER, J.** Multichannel Blind Iterative Image Restoration. *IEEE Transactions on Image Processing,* 2003, vol. 12 (9), 1094-1106
- **WIRAWAN ; P. DUHAMEL ; H. MAITRE.** Multichannel high resolution blind image restoration. *Proc. IEEE ICASSP, AZ,* November 1999, 3229-3232
- **N.A. WOODS ; N.P. GALATSANOS ; A.K. KATSAGGELOS.** EM-Based Simultaneous Registration, Restoration, and Interpolation of Superresolved Images. *Proc. IEEE ICIP,* September 2003, 303-306
- **A.E. YAGLE.** Blind superresolution from undersampled blurred measurements. *Proc. SPIE,* December 2003, vol. 5205, 299-309